# EUROPEAN PATENT SPECIFICATION

(11) **EP 3 020 099 B1**
(45) Date of publication and mention of the grant of the patent: **07.10.2020**
(21) Application number: 14735595.2
(22) Date of filing: 07.07.2014
(51) Int. Cl.: H01R 13/52, H01R 13/436

(54) **ELECTRICAL PLUG TYPE CONNECTOR AND PLUG TYPE CONNECTOR SYSTEM FOR AN ELECTRIC OR HYBRID VEHICLE**
ELEKTRISCHER STECKER UND STECKVERBINDERSYSTEM FÜR EIN ELEKTRO- ODER HYBRIDFAHRZEUG
CONNECTEUR DE TYPE FICHE ÉLECTRIQUE ET SYSTÈME DE CONNECTEUR DE TYPE FICHE DESTINÉ À UN VÉHICULE ÉLECTRIQUE OU HYBRIDE

(30) Priority: 08.07.2013 DE 102013213336
(43) Date of publication of application: 18.05.2016
(73) Proprietor: TE Connectivity Germany GmbH, 64625 Bensheim (DE)
(72) Inventor: WITTROCK, Frank, 69198 Schriesheim (DE); WEYRAUCH, Dirk, 64653 Lorsch (DE)
(74) Representative: Grünecker Patent- und Rechtsanwälte PartG mbB
(86) International application number: PCT/EP2014/064432
(87) International publication number: WO 2015/004053

(56) References cited:
- EP-A1- 2 365 589
- EP-A1- 2 525 443
- EP-A1- 2 573 880
- WO-A1-2012/146766
- WO-A1-2012/169144

## Description

The present invention relates to an electrical plug type connector for electrically contacting a mating connector, as required in particular as a charging socket for an electric or hybrid vehicle.

For charging the batteries in electric or hybrid vehicles, there have now become established various systems which operate with comparatively high voltages and currents (for example, 400 Volt alternating current at 50 or 60 Hz) in order to keep the charging times for charging the vehicle battery as short as possible. These high voltages involve strict safety requirements with respect to the contact safety and breakdown strength and the creep currents which occur.

A complication when used on a motor vehicle is that the charging socket can also come into contact with moisture and in the case of winter use or coastal climates also with salt water. Accordingly, the relevant requirements for connectors, sockets, vehicle couplings and vehicle connectors during conductive charging of electric vehicles have to be complied with. The relevant provisions are set out in the standard IEC 62196-1:2012 (Chapter 28), which refers to IEC 60664-1:2007. According to IEC 62196-1, the sizing of the creep paths is intended to be configured in accordance with a pollution degree 4 according to IEC 60664-1.

Since the contact with water spray and moisture cannot be avoided in principle, means must further be provided in order to discharge water which has entered the charging socket in a defined manner from the plug type connector region again.

To this end, it is known to fit drains which direct water which has entered the contact chambers or the plug type collars of the charging socket via a corresponding drainage path out of the plug type connector region again.

Such drainage openings in the contact chambers and inside the plug type collar further have the advantage that, when the plug type connection is assembled and released, an exchange of air can take place, so that the insertion forces remain as small as possible. Examples of such drainage arrangements are described in US 8,257,101 B2 and EP 2525443 A1.

US 5,066,252 A discloses a receiving member for metal contacts which is intended to prevent unintentional securing of the contact receiving member in a plug type connector by means of the provision of a two-step locking process.

Furthermore, WO 2012/169144 A1 makes reference to a sealed plug type connector for contacting a motor-vehicle-side mating connector having a lock for fixing the plug type connector in the inserted state.

WO 2012/146766 A1 relates to an electrical connector with a multi-contact body that has ventilation ducts which are in communication with the rear side atmosphere for providing ventilation when plugging or unplugging a mating connector. These ventilation ducts are configured to allow pressure relief but are not configured to drain water from the contact cavities.

EP 2 573 880 A1 discloses a housing for an electrical connector having a drainage. The housing has an inner portion which extends in axial direction of a flat rear wall and is arranged radially inside a cylindrical outer wall. The outer wall has a drainage opening extended to the cylindrical channel of the inner portion. The inner portion has a bore which extends in an axial direction, has an opened end at the rear wall and is limited on the other end. A discharge channel extends from the bore to the outer surface of the rear wall. A drainage groove formed in the outer surface of the rear wall extends from the discharge channel to provide a flow path for fluid to the drainage opening.

EP 2 365 589 A1 is directed towards a female terminal and charging connector. An object of the arrangement according to this document is to discharge muddy water to the outside of a contact-member accommodating portion and, hence, protect a contact member. This document discloses a female terminal into which a male terminal is fittable. The female terminal is provided with a contact member in which a plurality of contact pieces extending in a connecting direction with the male terminal are arranged in a circumferential direction, intermediate parts of the contact pieces in an extending direction are radially inwardly curved, and the contact pieces resiliently come into contact with the male terminal while holding the male terminal by the curved parts, and a terminal main body in which a contact-member accommodating portion for accommodating the contact member inside projects forward from a female-side main portion. The contact-member accommodating portion includes a front wall constituting a front end part of the contact-member accommodating portion and a side wall formed between the front wall and the female-side main portion. An entrance hole for allowing the entrance of the male terminal into the contact-member accommodating portion is formed in the front wall, and a first discharge hole for allowing the inside and outside of the contact-member accommodating portion to communicate is formed in the side wall.

However, since in these known arrangements, on the one hand, the drainage openings of the contact chambers open in common drainage channels and these are further formed by means of a cooperation of sealing elements and housing walls, the known arrangements are not suitable for complying with the requirements with respect to the long creep paths according to a pollution degree 4 of IEC 60664-1.

The object addressed by the present invention is therefore to provide an electrical plug type connector, for example, for the charging socket of an electric or hybrid vehicle, which also operates under harsh conditions of use in a correct and safe manner.

This object is achieved by the subject-matter of the independent patent claim 1.

Advantageous developments of the present invention are set out in the dependent patent claims.

In this instance, the present invention is based on the recognition that the water discharge paths in a plug type connector in the context of creep current resistance also constitute an electrically conductive connection. It has further been recognised that separation of the fluid paths from each other and from other current-carrying contacts using only pressed-on sealing elements in the context of the creep current resistance is not an adequately reliable separation.

According to the present invention, each of the contact chambers is therefore connected to a separate drainage channel which is formed in the housing integrally and in a state separated from the other drainage channels. In this manner, it is possible for the drained fluids from the various contact chambers no longer to be able to come into contact with each other to form a closed electrical connection in the context of a creep current path. Furthermore, although a housing with such drainage channels places higher demands on the mould removal technology, it is more cost-effective and easier to assemble in terms of the subsequent assembly and number of individual components.

In particular by means of the provision of the drainage channels which are separated from each other for the high-voltage contact chambers, the compliance with the air and creep paths according to IEC 62196-1:2012 can be complied with.

The drainage channels according to the present invention enable, owing to their spatial separation, air and creep paths having a length of, for example, 60 mm. A high level of insulation resistance can thereby be achieved, even after being subjected to salt water, whereby a high level of reliability can be ensured even during operation in contaminated environments.

In the plug type connector according to the invention, the at least two contact chambers which contain the power contact elements are generally arranged within a substantially tubular insertion socket. Since this insertion socket is arranged in a motor vehicle in most cases so that it is orientated in an oblique manner towards the rear, fluid can accumulate therein and a separate drainage opening for this region, which is also referred to below as an insertion face, has to be provided. According to the invention, this drainage opening is connected to precisely one of the drainage channels so that no connection to the remaining contacts can be produced. This is the drainage channel which removes water from the contact chamber of a contact element which is connected to earth.

Alternatively, however, there may also be provision for the insertion socket to provide a separate drainage channel which is constructed integrally in the housing.

The electrical plug type connector according to the invention may have, for mounting, for example, on a motor vehicle, an assembly plate, the insertion socket at least partially protruding from the assembly plate. Since, as already mentioned, the gradient of the insertion socket is conventionally directed towards the rear and towards the inner side, the drainage opening is advantageously arranged in an end region of the insertion socket, which end region faces the assembly plate and which is directed downwards during assembly so that no fluid can accumulate inside the insertion face.

In order to fix the power contact elements within their respective contact chambers, catch means for engaging the contact elements may advantageously be provided. In addition to catch hooks, which cooperate with the metal contact, there may also be provided catch openings in which projections of the contact engage. In a particularly elegant manner, there may be provision for the opening which leads to the drainage channel in this context to perform a dual function and to be constructed both for engagement and for discharging the fluids.

Owing to the fact that the catch elements for the power contacts are arranged in the drainage channel, they can be constructed in a particularly space-saving, resilient and flexible manner and their removal from the mould in the injection-moulding tool can be carried out in a relatively simple manner.

So that the arrangement is completely sealed at the inner side, in order to seal the transition between the power contacts and the respective associated contact chambers, a sealing means, such as, for example, an O-ring of a resilient material, may be provided. Owing to the fact that each of the contact chambers is in air exchange with the external space via the drainage channels, when the plug type connector and the mating connector thereof are joined together, no pressure loads can occur on these sealing means.

So that the assembled power contact elements remain securely fixed in a rattle-free manner, even with great temperature changes, there may advantageously be provided a secondary locking device for locking the power contact elements to the housing.

This locking device is actuated in a particularly reliable and efficient manner if it can be displaced in a direction transverse relative to the assembly direction of the plug type connector and mating connector.

So that the water discharged from the drainage channels can be supplied to a defined end position, there is preferably provided for collecting and discharging the fluid discharged from the drainage channels a discharge connection piece which may be able to be connected, for example, to a hose.

The power contact elements are connected at the side facing away from the connector face to lines which are in contact with the vehicle electric system. For this connection, it is possible to use, for example, crimp, solder or plug type connections. In order to protect such contacting arrangements, the plug type connector may have a cover which can further also be provided with a suitable tensile relief member. Adequate contact protection and mechanical protection of the cable contacts is thereby enabled.

In addition to the actual power contacts, at least one signal contact for transmitting signals between the electrical plug type connector and the mating connector may be provided on the plug type connector. The transmission can take place in a contacting or contact-free manner, such as, for example, an optically inductive or capacitive manner. Since these signal contacts do not guide any high voltages and currents, it is sufficient for the drainage thereof to be carried out into the insertion face. To this end, corresponding drainage openings may be provided in the contact chambers of the signal contact. The signal contact elements are also connected to the vehicle electronic system in the contact region thereof by means of corresponding lines.

The housing of the plug type connector according to the invention is produced from a suitable electrically insulating, mechanically stable and age-resistant plastics material, for example, using injection-moulding technology.

As already mentioned, the advantages of the solution according to the invention are evident in particular when the plug type connector is used as a charging socket for an electric or hybrid vehicle. Of course, however, the solutions according to the invention may also be used for other plug type connectors in which adequate air and creep current resistance and removal of water even in moist or salt-containing atmospheres have to be ensured.

For better understanding of the present invention, it is explained in greater detail with reference to the embodiments illustrated in the following Figures. Components which are the same are given the same reference numerals and the same component names. Furthermore, some features or feature combinations from the different embodiments shown and described may also constitute solutions which are independent, inventive or in accordance with the invention per se.

In the drawings:
Figure 1 is a perspective sectioned illustration of an electrical plug type connector according to an advantageous embodiment of the present invention;
Figure 2 is a perspective view of the housing, when viewed towards the insertion face;
Figure 3 is a perspective view of the housing, when viewed towards the cable connection side;
Figure 4 is a plan view of the housing, when viewed towards the insertion face;
Figure 5 is a plan view of the housing, when viewed towards the connection side;
Figure 6 is a first cross-section through the arrangement of Figure 4;
Figure 7 is a second cross-section through the arrangement of Figure 4;
Figure 8 is a third cross-section through the arrangement of Figure 4;
Figure 9 is a first cross-section through the arrangement of Figure 5;
Figure 10 is a second cross-section through the arrangement of Figure 5;
Figure 11 is a detail from Figure 9;
Figure 12 is a detail from Figure 8.

The present invention is described below with reference to the example of a charging socket for an electric or hybrid vehicle. For a person skilled in the art, however, it is clear that the ideas according to the invention can be used everywhere where electrical contacts with higher voltages are intended to be inserted in a safe manner under harsh environmental conditions.

In this instance, the embodiment of an AC charging socket in accordance with a GB/Chinese standard is always set out. In this standard, five power contact elements and two signal contacts are provided. However, the principles according to the invention may of course also be used with all other alternating current, direct current or combined AC/DC charging systems.

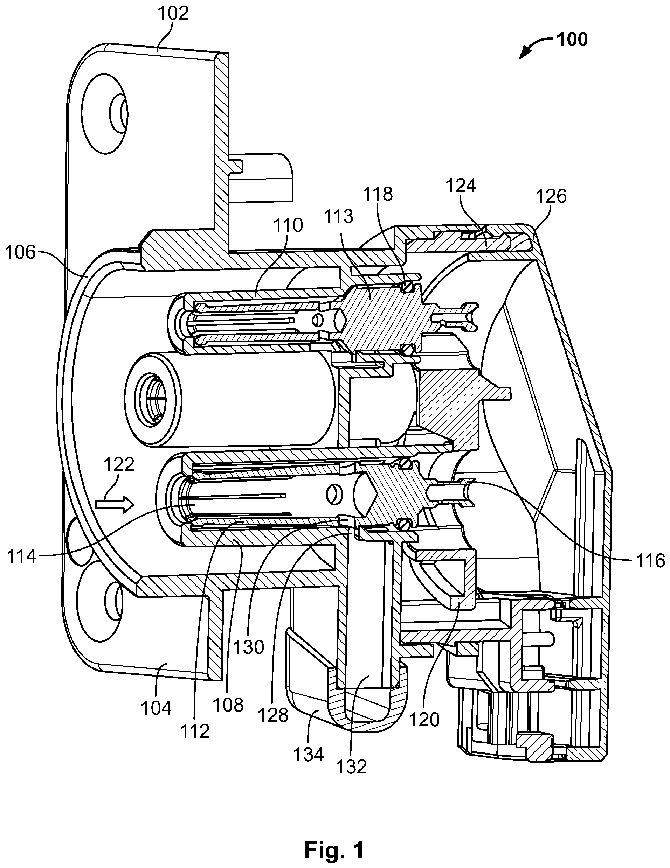

Figure 1 is firstly a sectioned, perspective view of the overall arrangement.

The charging socket 100, which is generally also referred to as a plug type connector, comprises a housing 102, which can be produced from an electrically insulating plastics material using injection-moulding technology. The housing 102 has an assembly plate 104, from which the actual insertion socket 106 partially protrudes. Inside the collar-like insertion socket 106, there are arranged in accordance with the GB/China Standard Part 2 five contact chambers 108 for the power contact elements and two contact chambers 110 for the signal contacts.

Electrically conductive power contact elements 112 which are generally produced from metal are received in each case in the contact chambers 108. In the embodiment shown, the power contact elements 112 are constructed as socket contacts. Of course, however, the present invention is not limited only to socket contacts. Pin contacts can naturally also be used for a plug type connector 100 according to the invention.

Each of the power contact elements 112 has a contact region 114 in which the electrical contact is closed with respect to the mating connector and a connection region 116 in which the lines which lead to the vehicle cabling and consequently to the vehicle electrical system are connected. In the embodiment shown, the connection region 116 is constructed as a socket contact, in the same manner as the contact region 114.

For reliable sealing between the housing 102 and the electrical power contact or signal contact, there is provision in the present embodiment for O-rings 118 to be fitted as a sealing means. The power contact elements 112 are, on the one hand, secured in the associated contact chambers 108 by way of catch means. On the other hand, there is provided a locking device 120 which can be displaced transversely relative to the insertion direction 122 in order to lock all seven contact elements in one operating step.

A cable guide 124 and a cable cover 126 which can be connected thereto protect the outgoing cables (not illustrated in the drawings) in the assembled state.

According to the invention, each of the contact chambers 108 has a drainage opening 128, through which fluids (that is to say, gas or liquids) which have entered the contact chamber can be discharged. Of course, the metal contact element 112 must also have an opening 130 at this location.

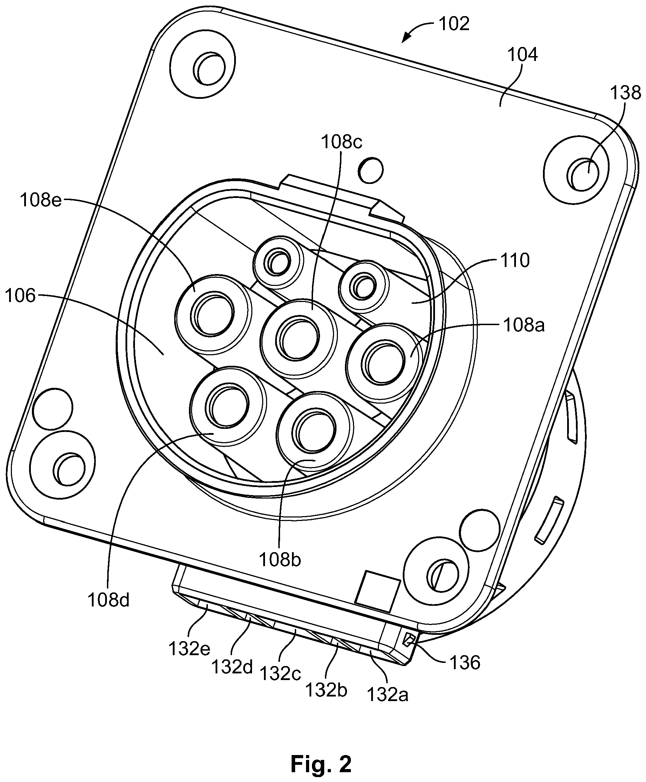

According to the invention, the drainage opening 128 opens into a drainage channel 132, which is produced from the housing material in a state closed at all sides in the cross-section thereof and is constructed separately for each contact chamber 108. Each of the drainage channels 132 which extend in a substantially parallel manner leads into the discharge connection pieces 134 which can lead the fluid, for example, to a hose. Figures 2 to 12 are various views and cross-sections of the housing 102 of the charging socket 100 according to the invention in accordance with a GB/China Part 2 Standard.

Figure 2 is a perspective view of the insertion face with the five contact chambers 108a-e for power contact elements and two contact chambers 110 for signal contacts. All the contact chambers 108a-e, 110 are arranged within the insertion socket 106. A separate drainage channel 132a-e is correspondingly associated with each of the contact chambers 108a-e. In the cross-section thereof, the drainage channels 132a-e are produced from the material of the housing 102 in a state closed at all sides and in an integral manner. The fluids which are discharged from the drainage channels 132 can be discharged via a discharge connection piece, which is secured to two catch projections 136.

Owing to this specific closed production method, the creep path between two contact elements with different potential may be twice the contact chamber length at the front side and twice the drainage channel length at the rear side. Values in the region of 60 mm can be readily achieved.

In the assembly plate 104, there are further provided securing openings 138, through which the charging socket 100 can be connected to the vehicle chassis by means of riveting or screwing.

The slightly oblique position of the housing 102 shown in Figure 2, in which the opening of the insertion face 106 is higher than the rear base region, substantially corresponds to the installation location of the plug type connector in the motor vehicle. It is therefore clear that water also has to be removed from the insertion socket 106. This takes place via drains which are described in greater detail below.

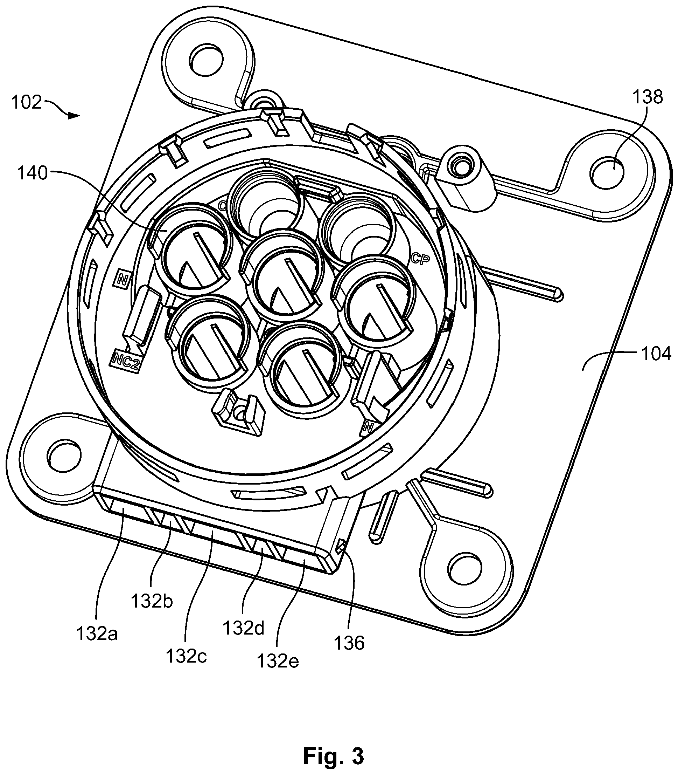

Figure 3 is a perspective view of the side of the housing 102 facing the vehicle inner space. In this instance, all seven contact chambers 108, 110 are surrounded by a collar which is not completely peripheral. This collar 140 serves to fix the locking device 120 in the secured state.

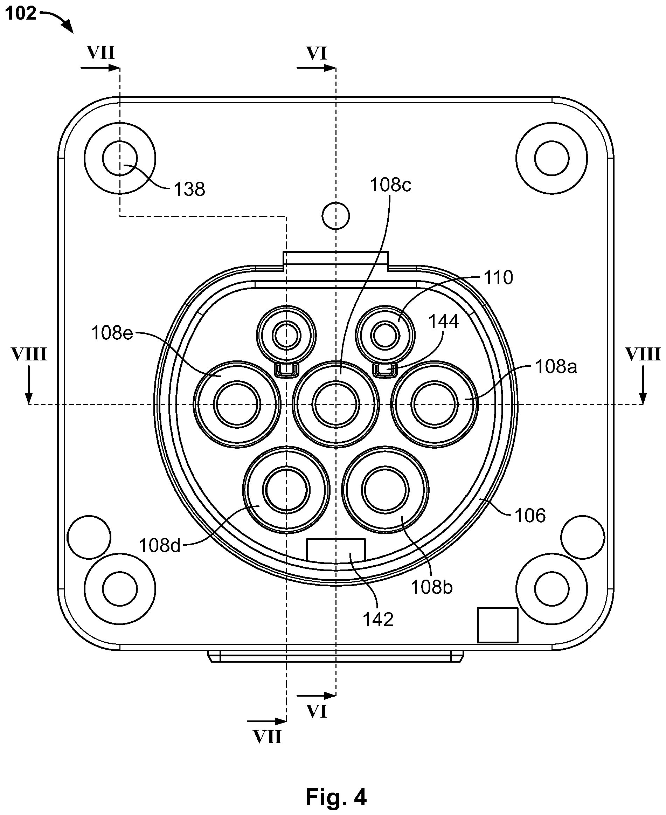

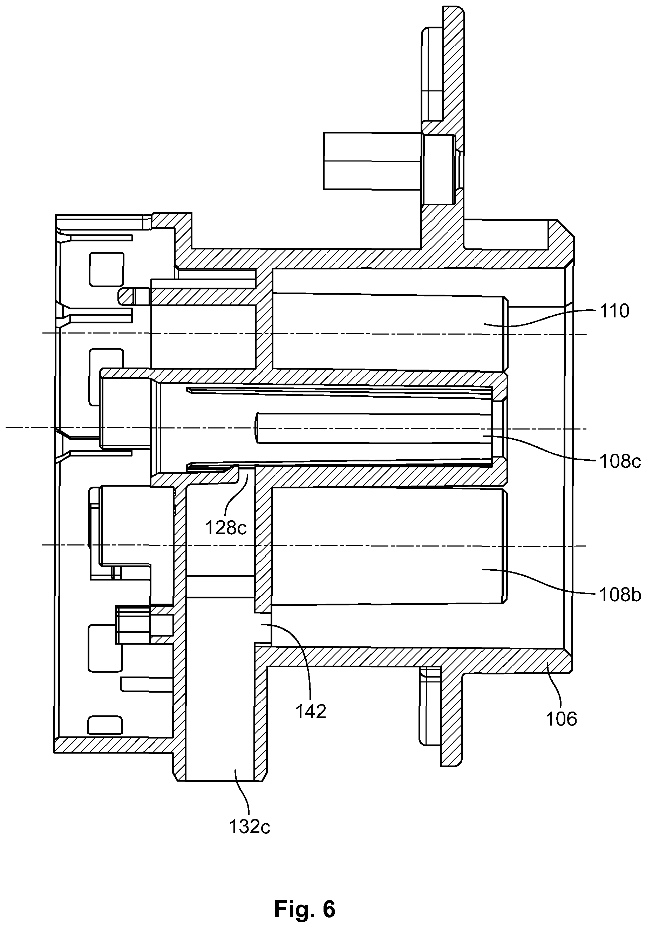

As can be seen from the plan view of Figure 4, another drainage opening 142 is provided to remove water from the insertion socket 106. As can be seen from the sectioned illustration in Figure 6, the drainage opening 142 opens in the central drainage channel 132c.

Water is removed from the signal contact chambers 110 via the drainage openings 144 into the insertion socket 106. Since the signal contact drainage openings 144 are arranged above the drainage opening 142 of the insertion socket under conventional installation conditions, the water which is discharged at this location flows down to the drainage opening 142, from where it can flow into the channel 132c and from there into the discharge connection piece.

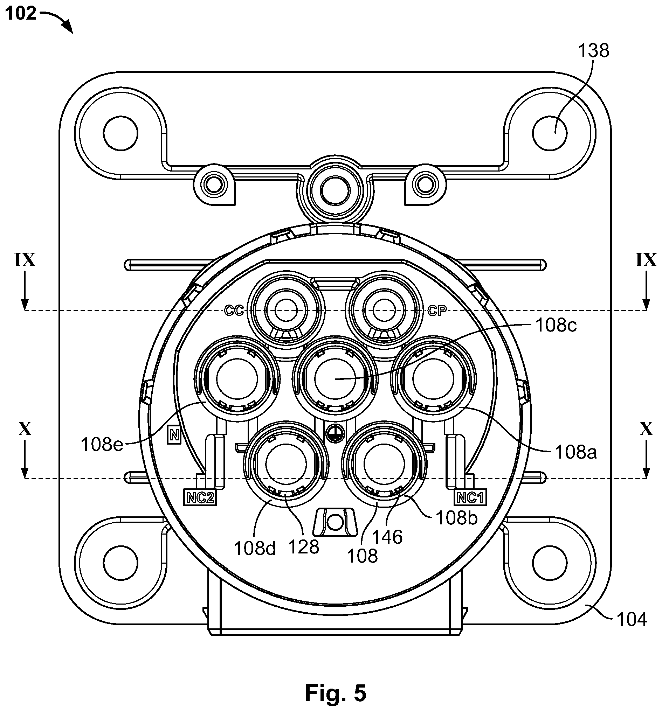

Figure 5 shows that the power contact elements are retained in the contact chambers 108 by means of compressing ribs 146. Furthermore, there is provided in each of the drainage openings 128 a catch device which cooperates with the power contact element in order to fix it in the contact chamber 108. In a similar manner, the drainage opening is also used on the signal contact chambers for forming a catch device.

As already mentioned, the drainage opening 142 shown in Figure 4 opens into the drainage channel 132c which is associated with the central contact chamber 108c. As can be seen from the contact designations of Figure 5, the contact which is arranged in the central contact chamber 108c is connected to earth and is therefore most suitable for connecting the drainage of the insertion socket 106 to the drainage channel 132c which is associated therewith. When the creep paths are taken into account, it can be seen that, as a result of the connection which is produced via the drainage opening 142, the spacing between the drainage opening 128c and the insertion-side inlet of the contact chamber 108b a sufficiently long distance is still also provided.

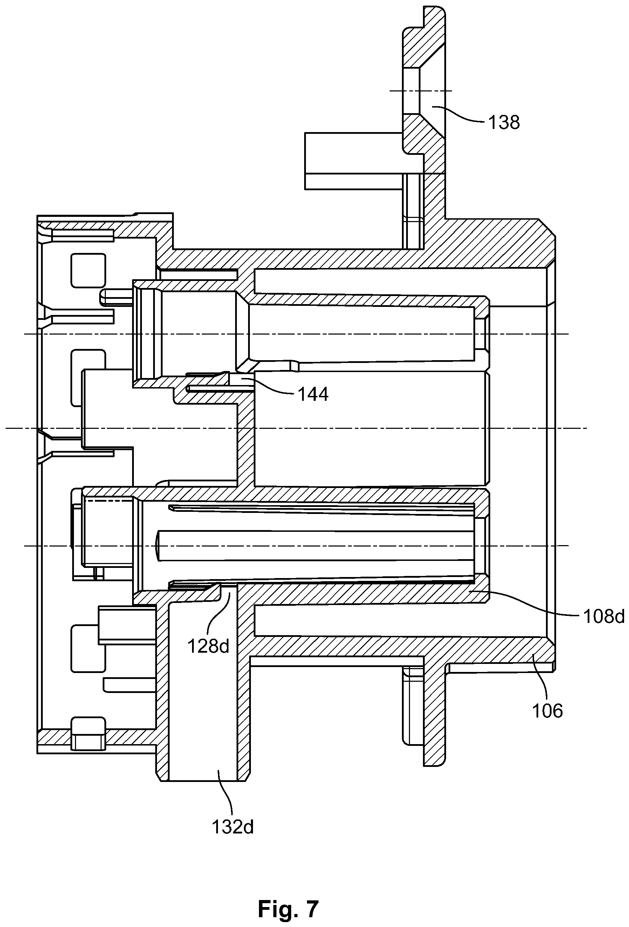

Figure 7 shows, as indicated in Figure 4, the cross-section through the contact chamber 108d and the signal contact chamber 110 which is located thereabove, and through the securing opening 138. In particular the position of the drainage opening 144 which leads outwards into the socket and which is further used as a catch device for the signal contact can be seen.

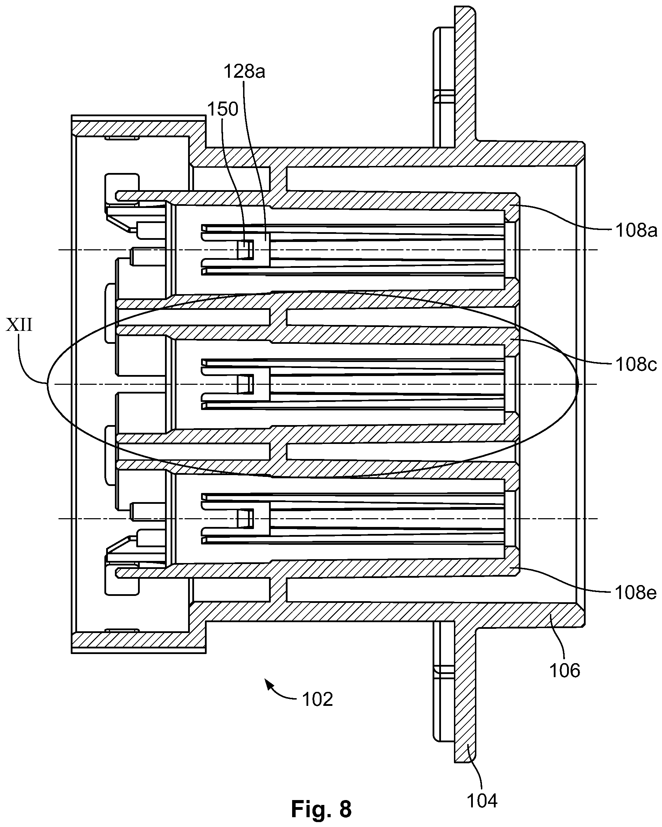

Figure 8 is a cross-section through the three upper power contact chambers 108a, 108c and 108e.

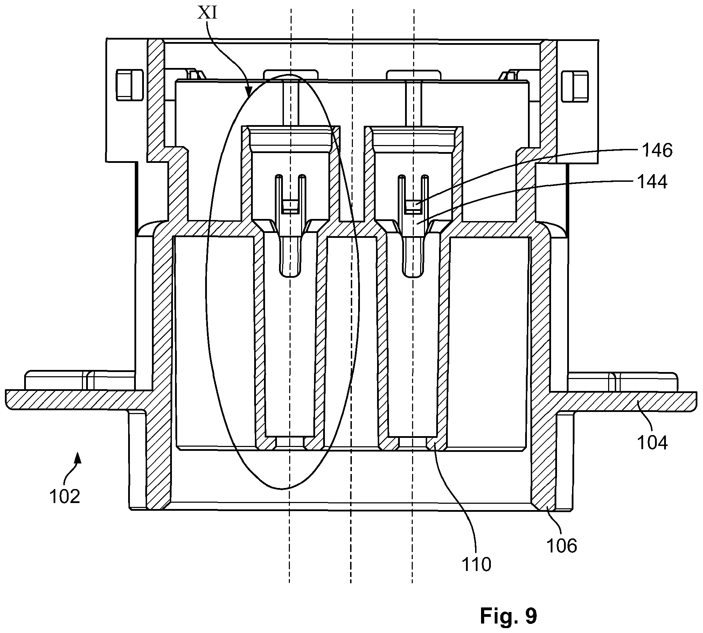

Figure 9 is accordingly the cross-section through the two signal contact chambers 110. It can be seen that the drainage opening 144 is advantageously at the same time used to form a catch arm 146, by means of which a primary engagement of the signal contact element 113 is enabled.

According to Figure 8, a corresponding catch arm 150 in the drainage opening 128 is provided in order to secure the respective power contact elements.

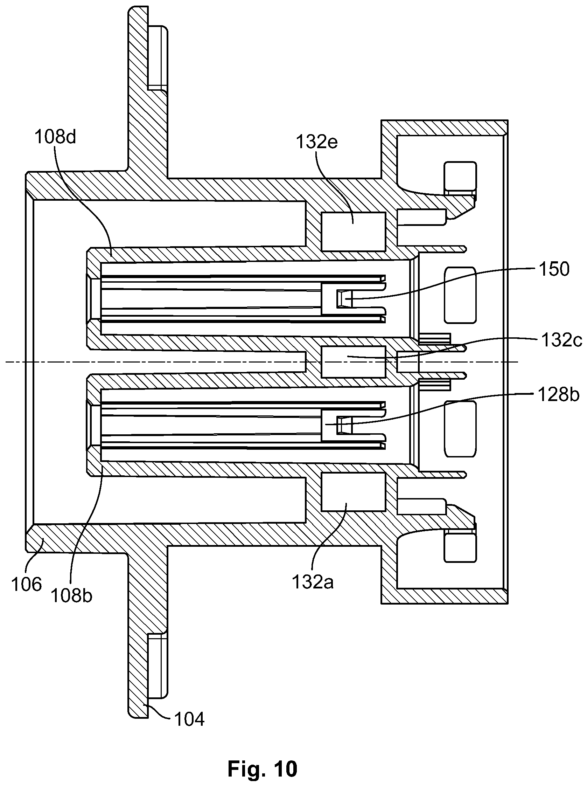

Figure 10 is another cross-section, this time through the two lower power contact chambers 108b and 108d. In addition to the catch arms 150 used for the engagement, the rectangular closed cross-section of the three drainage channels 128a, 128c and 128e which extend from above can further be seen from this sectioned illustration.

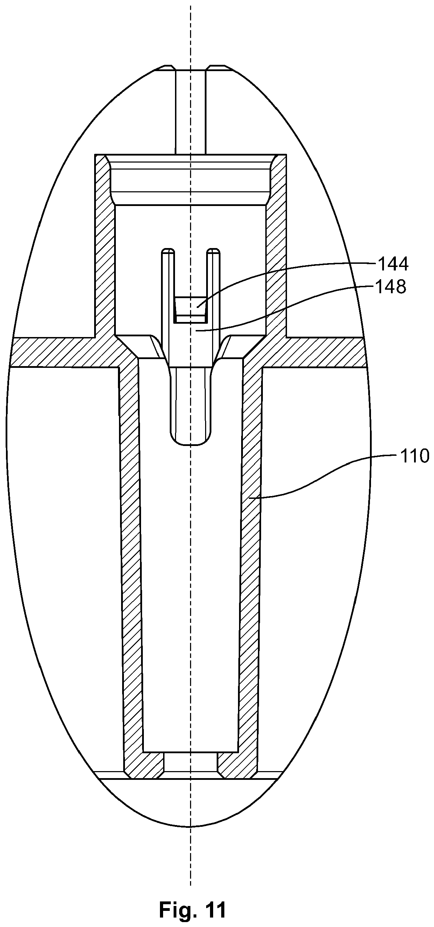

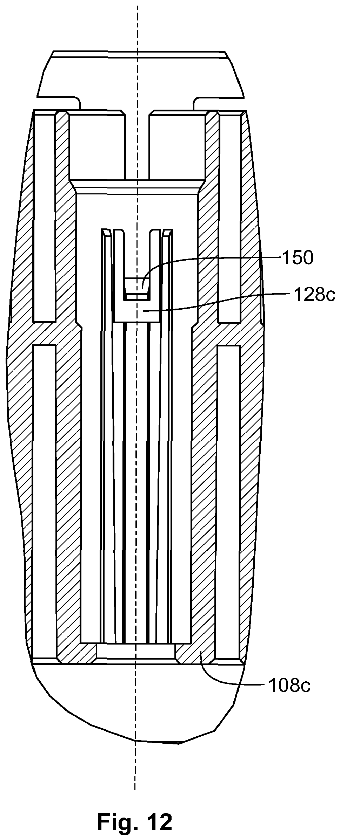

Figures 11 and 12 finally show the locking mechanism for the contact elements, again as detailed views from Figures 9 and 8, respectively.

Using the solution according to the invention, it is possible to construct a charging socket for a motor vehicle in such a manner that all requirements with respect to creep current paths and air paths can be complied with even in the presence of significant occurrences of contamination or the influence of salt-containing water spray. The production is cost-effective with high batch numbers and the assembly and mounting are precise and simple.

**LIST OF REFERENCE NUMERALS**

| | |
|---|---|
| 100 | Charging socket/Plug type connector |
| 102 | Housing |
| 104 | Assembly plate |
| 106 | Insertion socket |
| 108a - e | Contact chambers for power contacts |
| 110 | Signal contact/Contact chambers |
| 112 | Power contact element |
| 113 | Signal contact element |
| 114 | Contact region |
| 116 | Connection region |
| 118 | O-ring |
| 120 | Locking device |
| 122 | Insertion ring |
| 124 | Insertion direction |
| 126 | Cover |
| 128 | Drainage opening |
| 130 | Opening in the contact element |
| 132a - e | Drainage channel |
| 134 | Discharge connection piece |
| 136 | Catch projection |
| 138 | Securing openings on assembly plate |
| 140 | Collar on contact chamber |
| 142 | Drainage opening on insertion socket |
| 144 | Drainage opening on signal contact |
| 146 | Compressing ribs |
| 148 | Catch arm for signal contact element |
| 150 | Catch arm for power contact element |

## Claims

1. Electrical plug type connector for electrically contacting a mating connector, wherein the plug type connector (100) comprises:
an electrically insulating housing (102) having at least two contact chambers (108a-e),
at least two power contact elements (112) which are each received in one of the at least two contact chambers (108a-e),
at least two separate drainage channels (132a-e) for discharging fluids from the plug type connector (100),
wherein the at least two contact chambers (108a-e) are arranged within a substantially tubular insertion socket (106) and wherein the insertion socket (106) has at least one drainage opening (142) which is connected to precisely one of the drainage channels (132a-e), wherein the precisely one drainage channel (132c) is arranged to remove water from a contact chamber (108c) of a contact element which is connectable to earth,
wherein each of the at least two contact chambers (108a-e) is connected to a separate drainage channel (132a-e),
wherein each of the drainage channels (132a-e) is fabricated from the housing material, so that it is integrally formed with the housing (102) and separated from the at least one other drainage channel, respectively, and drained fluids from the at least two contact chambers no longer are able to come into contact with each other.

2. Electrical plug type connector according to claim 1, wherein the housing has an assembly plate (104) for mounting the plug type connector on a carrier, wherein the insertion socket (106) protrudes at least partially from the assembly plate (104) and the drainage opening (142) is arranged in an end region of the insertion socket (106), said end region being adjacent to the assembly plate.

3. Electrical plug type connector according to any one of the preceding claims, wherein the at least two contact chambers (108a-e) have catch means (148, 150) for engaging the power contact elements (112a-e) which are received therein.

4. Electrical plug type connector according to any one of the preceding claims, wherein sealing means are provided, which are configured to seal a transition between the at least two power contact elements and the associated contact chambers, respectively.

5. Electrical plug type connector according to claim 4, wherein the sealing means have at least one resilient O-ring (118).

6. Electrical plug type connector according to any one of the preceding claims, further having a locking device (120) for fixing the at least two power contact elements (112a-e) to the housing (102).

7. Electrical plug type connector according to claim 6, wherein the locking device (120) has a sliding lock configured to be displaced in order to lock and release the fixing in a direction transverse relative to an assembly direction (122) of the plug type connector (100) and mating connector.

8. Electrical plug type connector according to any one of the preceding claims, further having a discharge connection piece (134) into which each of the drainage channels (132a-e) extend in a substantially parallel manner for collecting and discharging the fluid discharged from the drainage channels (132a-e).

9. Electrical plug type connector according to any one of the preceding claims, further having a cover (126) configured to cover electrical lines which can be connected to the power contacts.

10. Electrical plug type connector according to any one of the preceding claims, wherein the at least two power contact elements (112a-e) are constructed as socket contacts.

11. Electrical plug type connector according to any one of the preceding claims, further having at least one signal contact element (113) for electrical, optical, inductive or capacitive transmission of signals between the electrical plug type connector (100) and the mating connector.

12. Electrical plug type connector according to any one of the preceding claims, wherein the housing (102) is produced as an injection-moulded component from an electrically insulating plastics material.

13. Charging socket for an electric or hybrid vehicle, having an electrical plug type connector according to claim 3 and any one of the claims 3 to 12, wherein said assembly plate (104) is adapted to be mounted on said vehicle.

14. Plug type connector system having an electrical plug type connector (100) according to any one of the preceding claims and an associated mating connector.

## Patentansprüche

1. Elektrischer Steckverbinder zum Herstellen von elektrischem Kontakt mit einem Gegenverbinder, wobei der Steckverbinder (100) umfasst:
ein elektrisch isolierendes Gehäuse (102), das wenigstens zwei Kontaktkammern (108a-e) aufweist,
wenigstens zwei Leistungs-Kontaktelemente (112), die jeweils in einer der wenigstens zwei Kontaktkammern (108a-e) aufgenommen sind,
wenigstens zwei separate Ablauf-Kanäle (132a-e) zum Ableiten von Flüssigkeiten aus dem Steckverbinder (100),
wobei die wenigstens zwei Kontaktkammern (108a-e) innerhalb einer im wesentlichen röhrenförmigen Einführungs-Buchse (106) angeordnet sind, die Einführungs-Buchse (106) wenigstens eine Ablauf-Öffnung (142) aufweist, die mit genau einem der Ablauf-Kanäle (132a-e) verbunden ist, und der genau eine Ablauf-Kanal (132c) zum Entfernen von Wasser aus einer Kontaktkammer (108c) eines Kontaktelementes eingerichtet ist, das mit Erde verbunden werden kann,
jede der wenigstens zwei Kontaktkammern (108a-e) mit einem separaten Ablauf-Kanal (132a-e) verbunden ist,
jeder der Ablauf-Kanäle (132a-e) aus dem Gehäusematerial so hergestellt wird, dass er integral mit dem Gehäuse (102) ausgebildet und jeweils von dem wenigstens einen anderen Ablauf-Kanal getrennt ist, und abgelaufene Flüssigkeiten aus den wenigstens zwei Kontaktkammern nicht mehr miteinander in Kontakt kommen können.

2. Elektrischer Steckverbinder nach Anspruch 1, wobei das Gehäuse eine Montageplatte (104) zum Montieren des Steckverbinders auf einem Träger aufweist, die Einführungs-Buchse (106) wenigstens teilweise von der Montageplatte (104) vorsteht und die Ablauf-Öffnung (142) in einem Endbereich der Einführungs-Buchse (106) angeordnet ist, wobei dieser Endbereich an die Montageplatte angrenzt.

3. Elektrischer Steckverbinder nach einem der vorangehenden Ansprüche, wobei die wenigstens zwei Kontaktkammern (108a-e) Einrasteinrichtungen (148, 150) aufweisen, die mit den Leistungs-Kontaktelementen (112a-e) in Eingriff kommen, die darin aufgenommen sind.

4. Elektrischer Steckverbinder nach einem der vorangehenden Ansprüche, wobei Dichtungseinrichtungen vorhanden sind, die so ausgeführt sind, dass sie jeweils einen Übergang zwischen den wenigstens zwei Leistungs-Kontaktelementen und den zugehörigen Kontaktkammern abdichten.

5. Elektrischer Steckverbinder nach Anspruch 4, wobei die Dichtungseinrichtungen wenigstens einen elastischen O-Ring (118) aufweisen.

6. Elektrischer Steckverbinder nach einem der vorangehenden Ansprüche, der des Weiteren eine Arretiervorrichtung (120) zum Fixieren der wenigstens zwei Leistungs-Kontaktelemente (112a-e) an dem Gehäuse (102) aufweist.

7. Elektrischer Steckverbinder nach Anspruch 6, wobei die Arretiervorrichtung (120) eine Gleit-Arretierung aufweist, die so ausgeführt ist, dass sie in einer Richtung quer zu einer Richtung (122) zum Zusammensetzen des Steckverbinders (100) und des Gegenverbinders verschoben werden kann, um die Fixierung zu arretieren und zu lösen.

8. Elektrischer Steckverbinder nach einem der vorangehenden Ansprüche, der des Weiteren ein Ableit-Verbindungsteil (134) aufweist, in das sich jeder der Ablauf-Kanäle (132a-e) im Wesentlichen parallel hinein erstreckt, um die über die Ablauf-Kanäle (132a-e) abgeleitete Flüssigkeit aufzufangen und abzuleiten.

9. Elektrischer Steckverbinder nach einem der vorangehenden Ansprüche, der des Weiteren eine Abdeckung (126) aufweist, die so ausgeführt ist, dass sie elektrische Leitungen abdeckt, die mit den Leistungs-Kontakten verbunden werden können.

10. Elektrischer Steckverbinder nach einem der vorangehenden Ansprüche, wobei die wenigstens zwei Leistungs-Kontaktelemente (112a-e) als Buchsen-Kontakte aufgebaut sind.

11. Elektrischer Steckverbinder nach einem der vorangehenden Ansprüche, der des Weiteren wenigstens ein Signal-Kontaktelement (113) zur elektrischen, optischen, induktiven oder kapazitiven Übertragung von Signalen zwischen dem elektrischen Steckverbinder (100) und dem Gegenverbinder aufweist.

12. Elektrischer Steckverbinder nach einem der vorangehenden Ansprüche, wobei das Gehäuse (102) als ein Spritzguss-Bauteil aus einem elektrisch isolierenden Kunststoffmaterial hergestellt wird.

13. Ladebuchse für ein Elektro- oder Hybridfahrzeug, die einen elektrischen Steckverbinder nach Anspruch 3 und einem der Ansprüche 3 bis 12 aufweist, wobei die Montageplatte (104) zum Montieren an dem Fahrzeug eingerichtet ist.

14. Steckverbinder-System, das einen elektrischen Steckverbinder (100) nach einem der vorangehenden Ansprüche sowie einen zugehörigen Gegenverbinder aufweist.

## Revendications

1. Connecteur de type prise électrique pour mettre électriquement en contact un connecteur enfichable, dans lequel le connecteur de type prise (100) comprend :
un boîtier électriquement isolant (102) présentant au moins deux chambres de contact (108a-e),
au moins deux éléments de contact énergétique (112) qui sont chacun accueillis dans une des au moins deux chambres de contact (108a-e),
au moins deux canaux de drainage séparés (132a-e) pour décharger des fluides issus du connecteur de type prise (100),
dans lequel les au moins deux chambres de contact (108a-e) sont disposées au sein d'un connecteur femelle d'insertion substantiellement tubulaire (106) et dans lequel le connecteur femelle d'insertion (106) dispose d'au moins une ouverture de drainage (142) qui est raccordée à un précisément des canaux de drainage (132a-e), dans lequel l'un précisément canal de drainage (132c) est disposé pour évacuer de l'eau d'une chambre de contact (108c) d'un élément de contact qui est raccordable à la terre,
dans lequel chacune des au moins deux chambres de contact (108a-e) est connectée à un canal de drainage séparé (132a-e),
dans lequel chacun des canaux de drainage (132a-e) est fabriqué à partir du matériau de boîtier, de sorte qu'il est intégralement constitué avec le boîtier (102) et séparé de l'au moins un autre canal de drainage, respectivement, et des fluides drainés depuis les au moins deux chambres de contact ne sont plus en mesure d'entrer en contact l'un avec l'autre.

2. Le connecteur de type prise électrique selon la revendication 1, dans lequel le boîtier présent une plaque d'assemblage (104) pour monter le connecteur de type prise sur un support, dans lequel le connecteur femelle d'insertion (106) dépasse au moins partiellement de la plaque d'assemblage (104) et l'ouverture de drainage (142) est disposée dans une zone d'extrémité du connecteur femelle d'insertion (106), ladite zone d'extrémité étant adjacente à la plaque d'assemblage.

3. Le connecteur de type prise électrique selon l'une quelconque des revendications précédentes, dans lequel les au moins deux chambres de contact (108a-e) disposent de moyens de saisie (148, 150) pour mettre en contact les éléments de contact énergétique (112a-e) qui sont accueillis en leur sein.

4. Le connecteur de type prise électrique selon l'une quelconque des revendications précédentes, dans lequel des moyens d'étanchéification sont fournis, qui sont configurés pour étanchéifier une transition entre les au moins deux éléments de contact énergétique et les chambres de contact associées, respectivement.

5. Le connecteur de type prise électrique selon la revendication 4, dans lequel les moyens d'étanchéification présentent au moins un joint torique souple (118).

6. Le connecteur de type prise électrique selon l'une quelconque des revendications précédentes, présentant en outre un dispositif de verrouillage (120) pour fixer les au moins deux éléments de contact énergétique (112a-e) au boîtier (102).

7. Le connecteur de type prise électrique selon la revendication 6, dans lequel le dispositif de verrouillage (120) dispose d'un verrou coulissant configuré pour être déplacé afin de verrouiller et libérer la fixation dans une direction transversale par rapport à une direction d'assemblage (122) du connecteur de type prise (100) et du connecteur enfichable.

8. Le connecteur de type prise électrique selon l'une quelconque des revendications précédentes, présentant en outre une pièce de connexion de décharge (134) dans laquelle chacun des canaux de drainage (132a-e) s'étend d'une manière substantiellement parallèle pour collecter et décharger le fluide déchargé à partir des canaux de drainage (132a-e).

9. Le connecteur de type prise électrique selon l'une quelconque des revendications précédentes, présentant en outre un capot (126) configuré pour couvrir des lignes électriques qui peuvent être connectées aux contacts énergétiques.

10. Le connecteur de type prise électrique selon l'une quelconque des revendications précédentes, dans lequel les au moins deux éléments de contact (112a-e) sont construits en tant que contacts femelle.

11. Le connecteur de type prise électrique selon l'une quelconque des revendications précédentes, présentant en outre un élément de contact de signal (113) pour une transmission électrique, optique, inductive ou capacitive de signaux entre le connecteur de type prise électrique (100) et le connecteur enfichable.

12. Le connecteur de type prise électrique selon l'une quelconque des revendications précédentes, dans lequel le boîtier (102) est produit en tant que composant moulé par injection à partir d'un matériau plastique électriquement isolant.

13. Prise femelle de chargement pour un véhicule hybride ou électrique, présentant un connecteur de type prise électrique selon la revendication 3 et l'une quelconque des revendications 3 à 12, dans lequel ladite plaque d'assemblage (104) est adaptée pour être montée sur ledit véhicule.

14. Système de connecteur de type prise présentant un connecteur de type prise électrique (100) selon l'une quelconque des revendications précédentes et un connecteur enfichable associé.
